# EUROPÄISCHE PATENTSCHRIFT

(11) **EP 1 624 984 B1**
(45) Veröffentlichungstag und Bekanntmachung des Hinweises auf die Patenterteilung: **01.12.2010**
(21) Anmeldenummer: 04731870.4
(22) Anmeldetag: 10.05.2004
(51) Int. Cl.: B21D 51/44, B23P 21/00, B23P 23/06, B65D 51/20, B23Q 41/04

(54) **BEARBEITUNGSEINRICHTUNG UND VERWENDUNG DERSELBEN ZUR HERSTELLUNG VON DECKELN MIT AUFREISSFOLIE**
PROCESSING DEVICE AND USE THEREOF FOR THE PRODUCTION OF COVERS WITH A FILM WHICH CAN BE TORN OFF
DISPOSITIF D'USINAGE ET UTILISATION DUDIT DISPOSITIF POUR LA FABRICATION DE COUVERCLES AVEC OPERCULE A DECHIRER

(30) Priorität: 13.05.2003 CH 8362003; 18.12.2003 CH 21742003
(43) Veröffentlichungstag der Anmeldung: 15.02.2006
(73) Patentinhaber: Soudronic AG, 8962 Bergdietikon (CH)
(72) Erfinder: GYSI, Peter, CH-5454 Bellikon (CH); OBERHOLZER, Marcel, CH-8963 Kindhausen (CH)
(74) Vertreter: Sutter, Kurt
(86) Internationale Anmeldenummer: PCT/CH2004/000282
(87) Internationale Veröffentlichungsnummer: WO 2004/101192

(56) Entgegenhaltungen:
- EP-A- 1 059 130
- WO-A-01/07330
- DE-A- 19 827 091
- US-A- 3 472 417
- US-A- 6 122 821

## Beschreibung

Die Erfindung betrifft eine Bearbeitungseinrichtung nach Anspruch 1.

Aus DE-A-198 27 091 ist ein Fertigungssystem für Behälterdeckel für Lebensmittelgläser bekannt, bei dem einzelne Bearbeitungsstationen entlang einer nicht näher erläuterten Transporteinrichtung angeordnet sind. Es werden geschlossene Deckel ohne Aufreissfolie hergestellt. Aus EP-A-1 059 130 ist eine Fertigungsanordnung für Behälterdeckel derselben Art bekannt. US-A-6 122 821 zeigt eine Montagelinie, bei der einzelne Montagestationen vorgesehen sind, zwischen denen die zu montierenden Werkstücke auf Werkstückträgern transportiert werden. Die Werkstückträger werden von Zahnriemen bewegt.

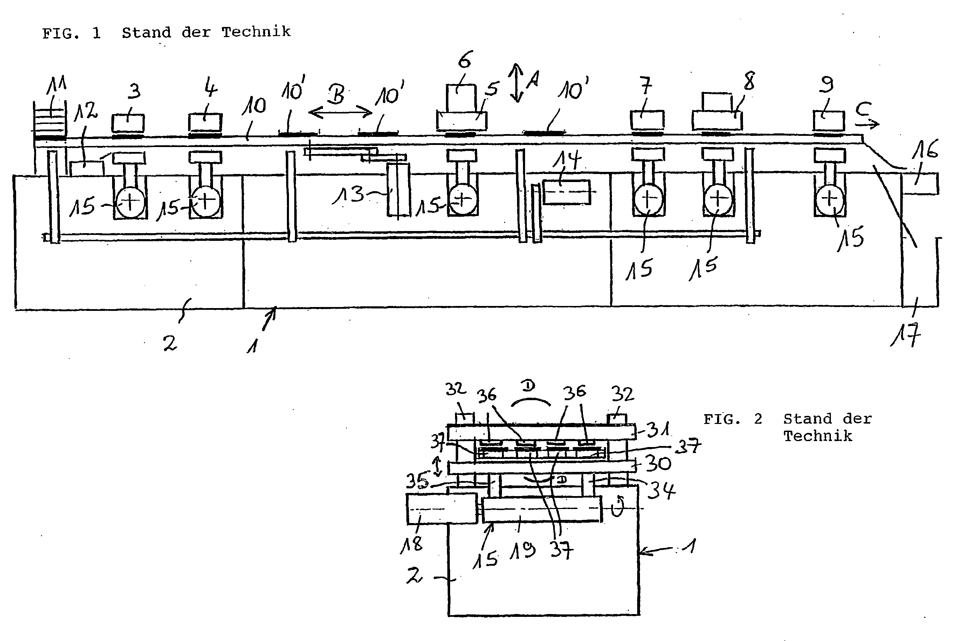

Es ist bekannt, Deckel für dosen- oder büchsenartige Verpackungen als auf der Verpackung oberseitig permanent befestigte Metalldeckel auszuführen, die eine Entnahmeöffnung ausbilden, die bis zum ersten Gebrauch des Verpackungsinhaltes durch eine durch Heisssiegelung aufgebrachte, abreissbare Folie, insbesondere Metallfolie, verschlossen ist. Ein zusätzlicher, über dem Metalldeckel angeordneter Deckel aus Kunststoff macht die Verpackung während der Verbrauchsdauer für deren Inhalt wiederverschliessbar. Eine herkömmliche Bearbeitungseinrichtung zur Herstellung solcher Metalldeckel wird nachfolgend anhand der Figuren 1 und 2 näher erläutert.

Der Erfindung liegt die Aufgabe zugrunde, Bearbeitungseinrichtungen und insbesondere derartige Metalldeckelbearbeitungseinrichtungen zu verbessern.

Dies wird mit der Bearbeitungseinrichtung gemäss Anspruch 1 erreicht. Mit der erfindungsgemässen Bearbeitungseinrichtung kann die Präzision bei der Deckelbearbeitung erhöht werden. Dadurch ergibt sich ein sicheres Haften der Heisssiegelfolie des Deckels und damit weniger Ausschuss bei der Deckelfertigung. Es ergibt sich ferner die Möglichkeit die Kadenz der Herstellung zu erhöhen.

Diese Vorteile und weitere Vorteile der Erfindung sowie auch der Stand der Technik werden nachfolgend anhand der Figuren näher erläutert. Dabei zeigt
Figur 1 eine schematische Seitenansicht einer Bearbeitungseinrichtung nach Stand der Technik;
Figur 2 eine schematische Frontalansicht einer Stanzbearbeitungsstation nach Stand der Technik;
Figuren 3 bis 9 Sektoren von Metalldeckeln zur Erläuterung von deren Herstellung;
Figur 10 eine schematische Seitenansicht einer Bearbeitungseinrichtung gemäss der Erfindung;
Figur 11 eine schematische Frontalansicht einer Stanzbearbeitungsstation der Bearbeitungseinrichtung;
Figur 12 eine schematische Frontalansicht einer weiteren Stanzbearbeitungsstation;
Figur 13 eine weitere Bearbeitungseinrichtung und
Figur 14 eine weitere Bearbeitungseinrichtung in teilweiser dreidimensionaler Darstellung.

Anhand der Figuren 1 bis 9 wird kurz der Stand der Technik einer Bearbeitungseinrichtung zur Herstellung von Metalldeckeln mit Abreissfolie erläutert. Figur 1 zeigt dabei eine schematische Seitenansicht einer solchen Einrichtung 1, welche auf einem Maschinengestell 2 mehrere Bearbeitungsstationen 3 bis 9 aufweist. Eine Fördereinrichtung 10, 13, 14 fördert Gegenstände in Förderrichtung, welche durch den Pfeil C angedeutet ist, vom Anfang der Einrichtung beim Stapel 11 bis zum Ende der Einrichtung, wo die Gegenstände über Rutschen in die Ablagen 16 oder 17 gelangen. Vom Stapel 11 werden die Gegenstände auf bekannte Weise abgestapelt und gelangen in die Förderanordnung. Diese weist zwei jeweils einzeln seitlich der Gegenstände angeordnete lange Schienen 10 auf, welche die auf Ablagen 10' bzw. in den Stationen 3 bis 9 liegenden Gegenstände beim Anheben der Stangen 10 mittels des Antriebes 14 in Richtung A nach oben anheben und sie danach durch eine Vorwärtsbewegung in Richtung des Pfeiles B (gleichgerichtet wie der Pfeil C) durch den Kurbelantrieb 13 um einen Betrag nach vorne versetzen. Danach werden die Stangen in Richtung des Pfeiles A nach unten bewegt wobei die Gegenstände wiederum auf ihren Ablagestellen abgelegt werden. Die Stangen 10 werden danach unterhalb der Gegenstandsablagepositionen in Pfeilrichtung B entgegen dem Pfeil C nach hinten bewegt um danach den beschriebenen Vorgang erneut durchzuführen. Die Gegenstände ruhen zwischen dem Transport auf ihren Ablagepositionen bzw. befinden sich in den Bearbeitungsstationen und werden dort bearbeitet. Nach einem Bearbeitungsschritt aller Bearbeitungsstationen erfolgt die erneute Förderung.

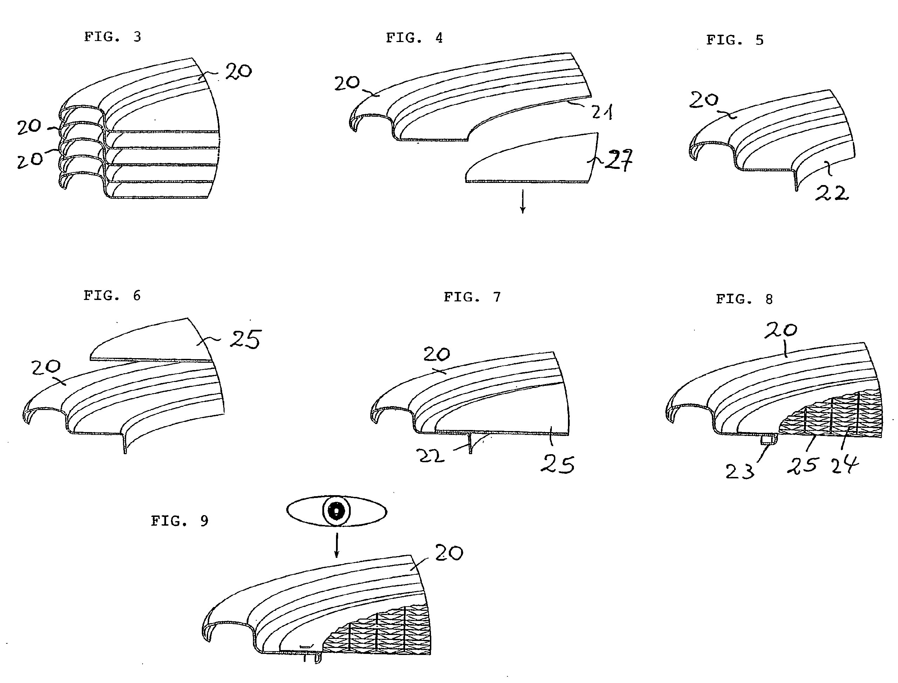

Figur 3 zeigt gestapelte metallene Deckelrohlinge 20 als Beispiel für Gegenstände, wie sie im Stapel 11 vorliegen. Die Bezugsziffer 20 wird dabei nachfolgend für alle Deckelteile verwendet, von den Rohlingen bis zu den fertigen Deckeln. Diese Rohlinge 20 sind z.B. runde Metallscheiben von z.B. 11cm Durchmesser. Natürlich sind andere Grundformen, z.B. quadratische oder rechteckige Scheiben und andere Durchmesser ohne weiteres möglich. Die Rohlinge 20 sind bereits in einer nicht dargestellten Bearbeitungsmaschine an ihrem Rand wie in Figur 3 gezeigt vorgeformt. In der Figur 3 und den nachfolgenden Figuren ist jeweils nur ein Sektor der ganzen Scheibe dargestellt, um die Zeichnungen zu vereinfachen. In der ersten Bearbeitungsstation 3 von Figur 1 wird durch eine Stanzbearbeitung mit Ober- und Unterwerkzeug eine Öffnung in die Scheibe gestanzt, was in Figur 4 ersichtlich ist, in welcher der Rand der Öffnung mit 21 bezeichnet ist und die ausgestanzte runde Scheibe mit 27. Diese Scheibe gelangt als Abfall in den Behälter 12 von Figur 1. Die Stanzbearbeitungsstation 3 wird durch einen Antrieb 15 angetrieben, was noch näher erläutert wird. Bei der Bearbeitungsstation 4 erfolgt ein Ziehen des Randes 21 nach unten, wodurch der in Figur 5 gezeigte Verlauf 22 des Randes erzielt wird. Die ringförmigen Deckelrohlinge 20 gelangen nun in die Bearbeitungsstation 5, in welcher eine Folie 25 über der Öffnung des Deckels 20 plaziert und dort durch Heissversiegelung befestigt wird, was in den Figuren 6 und 7 ersichtlich ist. Die Metallfolie 25 ist dazu auf bekannte Weise an ihrer Unterseite mit einer Kunststoffschicht versehen. Der benötigte runde Folienzuschnitt, der ebenfalls mit 25 bezeichnet ist, wird in der Regel in der Station 5 aus einer breiten Folienbahn ausgestanzt und über der Mittelausnehmung der ringförmigen Scheibe plaziert und durch die Heissversiegelungsstation wird die Folie unter Hitzeeinwirkung am Rand der runden Ausnehmung des Teils 20 unter Hitzeeinwirkung angepresst, so dass die Folie 25 mit dem metallenen Deckelteil 20 durch Aufschmelzen und nachfolgendes Abkühlen der Kunststoffschicht dicht verbunden wird. Dies ist bekannt und wird hier nicht näher erläutert. Zur Abkühlung kann allenfalls eine Kühlbearbeitungsstation 7 vorgesehen sein. In der Bearbeitungsstation 8 wird die Folie 25 mit einer Prägung 24 versehen, und es wird weiter der Rand 22 zum fertigen Rand 23 umgebördelt. In einer ebenfalls als Bearbeitungsstation zu bezeichnenden Prüfstation 9 werden die nun fertigen Deckel einer Prüfung unterzogen, welche in der Regel eine Dichteprüfung für die auf dem Deckel aufgebrachte Abziehfolie 25 umfasst. Ist die Folie dicht auf dem restlichen Metalldeckel befestigt, so gelangt der Deckel in die Aufnahme 16 für die fertigen Deckel. Wird eine Undichtigkeit festgestellt, so gelangt der Deckel über die andere dargestellte Rutsche in den Abfallbehälter 17. Nach Stand der Technik werden in jeder Bearbeitungsstation mehrere quer zur Förderrichtung angeordnete Deckel gleichzeitig bearbeitet. Figur 2 zeigt dies für die Stanzbearbeitungsstation 3, wobei dazu eine an sich bekannte Stanzeinrichtung dargestellt ist. Diese weist vier Tragsäulen 32 auf, von denen die in Blickrichtung hinteren Tragsäulen nicht ersichtlich sind. An diesen Tragsäulen sind der obere Werkzeugträger 31 und der untere Werkzeugträger 30 angeordnet, welche die oberen Stanzwerkzeuge 36 bzw. die unteren Stanzwerkzeuge 37 tragen. Diese Stanzwerkzeuge sind Mehrfachwerkzeuge, wobei im gezeigten Beispiel gleichzeitig vier Deckel gestanzt werden können. Der obere oder der untere Werkzeugträger wird zur Ausführung der Stanzbewegung angetrieben, wobei in Figur 2 die Bewegung des unteren Werkzeughalters 30 mit dem Antrieb 15 gezeigt ist, der aus einem Antriebsmotor 18 und einer Exzenterwelle 19 besteht, welche über Stössel 34, 35 den unteren Werkzeugträger auf- und ab bewegt, der dabei an den Säulen 32 und 33 geführt ist. Zur Erhöhung der Anzahl hergestellter Deckel kann die Breite der Bearbeitungseinrichtung vergrössert werden, so dass also die Stanzbearbeitungsstation 3 von Figur 2 z.B. sechs oder acht Deckel anstelle der gezeigten vier Deckel gleichzeitig mit einem Mehrfachwerkzeug bearbeitet. Auch kann versucht werden, die Anzahl der pro Zeit gestanzten Deckel zu erhöhen, indem die Hubzahl pro Zeit der Stanzstation und entsprechend die Kadenz der weiteren Bearbeitungsstationen erhöht wird. Einer Erhöhung der Hubzahl stehen die beträchtlichen Massen der Bearbeitungsstationen entgegen. Bei der Verbreiterung der Bearbeitungsstationen ergibt sich eine zunehmende Durchbiegung der Werkzeugträger 30 bzw. 31 aufgrund der hohen Stanzkräfte, was durch die gekrümmten Linien D angedeutet ist. Dies bedingt eine zunehmend stabilere Ausgestaltung der Werkzeugträger und ergibt wiederum erheblich grössere Massen. Es hat sich gezeigt, dass die Dichtigkeit der Aufreissfolie 25 am Deckelteil 20 sehr stark von der Qualität der Stanzung in der Bearbeitungsstation 3 abhängig ist. Auch eine geringfügige Zunahme der Durchbiegung einer der Werkzeugträger kann zu Undichtigkeiten des fertigen Deckels führen.

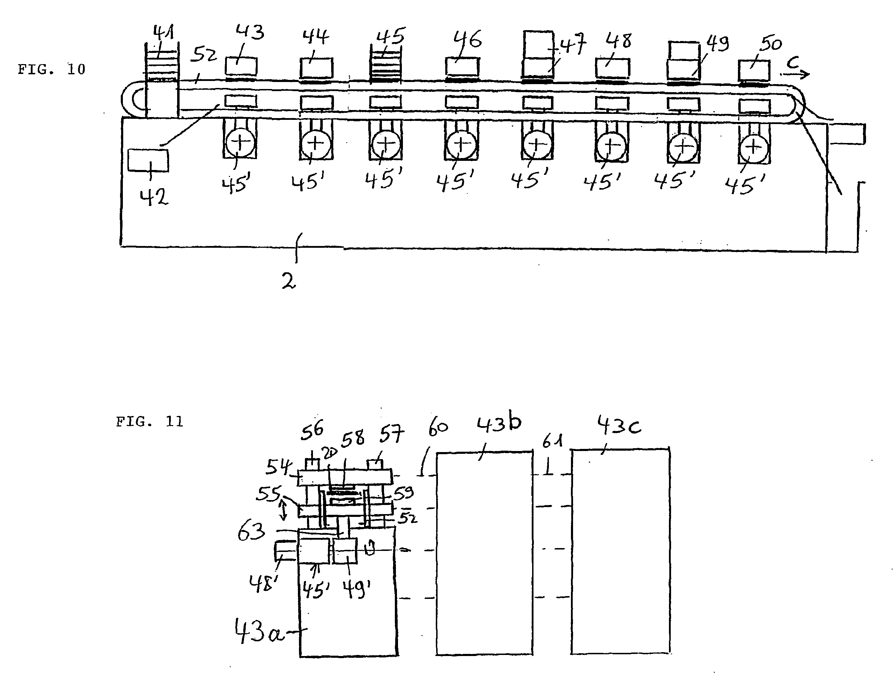

Die Figuren 10 und 11 zeigen nun erste Ausführungsformen einer erfindungsgemässen Bearbeitungseinrichtung. Dabei wird als bevorzugtes Beispiel der Gegenstandsbearbeitung mit grundsätzlich gleichen Verfahrensschritten ebenfalls ein Deckel gemäss den Figuren 3 bis 9 erzeugt. Auf einem Gestell 2 sind dazu die Bearbeitungsstationen 43 bis 50 angeordnet. Eine Fördereinrichtung 52 transportiert die zu bearbeitenden Deckelteile wiederum in Förderrichtung C schrittweise durch die Bearbeitungsstationen, wobei die Fördereinrichtung eine Ausgestaltung in bandförmiger Form aufweist, was nachfolgend noch näher erläutert wird. Die Deckelteile 20 von Figur 3 sind in einem Stapel 41 angeordnet und werden auf grundsätzlich bekannte Weise auf die Fördereinrichtung abgestapelt. Die erste Bearbeitungsstation 43 stanzt wiederum die Öffnung in die Scheiben 20 und stanzt damit die Platte 27 aus. Diese gelangt in den Abfallbehälter 42. Ein Antrieb 45 treibt die Stanzstation an. Figur 11 zeigt nun eine Frontalansicht einer Ausführungsart einer Bearbeitungsstation, als Beispiel die Stanzstation 43, gemäss der Erfindung. Diese weist funktionell separate Einheiten für die Bearbeitungsstation bzw. die Stanzstation auf. Es sind dabei in dem Beispiel 3 Einheiten 43a, 43b und 43c nebeneinander gezeigt, von denen jede nur einen Deckel bearbeitet, so dass in dem gezeigten Beispiel quer zur Förderrichtung jeweils drei Deckel gleichzeitig bearbeitet werden. Jede Einheit 43a, 43b, 43c ist funktionell so unabhängig von den anderen Einheiten, dass die Biegekräfte bei der Bearbeitung in der Bearbeitungsstation, in dem Beispiel der Stanzbearbeitungsstation, nicht oder nur unwesentlich auf die anderen Bearbeitungsstationen einwirken. Im Beispiel von Figur 11 ist dazu jede Bearbeitungsstation eine völlig separate Einheit, welche jeweils für sich alleine die vier Säulen 56, 57 den oberen Werkzeugträger 54 mit dem Werkzeug 58 für einen Deckel und dem unteren Werkzeugträger bzw. der Werkzeugplatte 55 mit dem unteren Werkzeug 59 für nur einen Deckel aufweist. Ein Antrieb 45 mit Motor 48 und Exzenter 49 wirkt über einen Stössel 63 auf die untere Werkzeugplatte 55 ein. Natürlich könnte auch diese Platte stationär sein und es könnte die obere Werkzeughalterplatte 54 auf- und ab bewegt werden. Neben der mit den genannten Teilen dargestellten Einheit der Bearbeitungsstation 43a ist die weitere Einheit 43b nur als rechteckiger Kasten und die weitere Einheit 43c ebenfalls als rechteckiger Kasten dargestellt. Diese Einheiten sind grundsätzlich gleich aufgebaut, wie dies anhand der ersten Einheit 43a geschildert worden ist. Es ist ersichtlich, dass bei diesem Aufbau einer Bearbeitungsstation die Durchbiegung auch bei einem relativ massearmen Aufbau derselben sehr gering gehalten werden kann und insbesondere durch die funktionelle Unabhängigkeit von den anderen Einheiten unabhängig davon ist, wie viele Einheiten nebeneinander platziert werden. Anstelle der gezeigten drei Einheiten, die die Bearbeitung dreier Deckel gleichzeitig erlauben, können natürlich beliebig viele Einheiten nebeneinander plaziert werden, z.B. sechs Einheiten oder auch acht Einheiten. Diese Zunahme der Einheiten erhöht die Durchbiegung der einzelnen Werkzeugträger nicht, so dass die Bearbeitungspräzision auch bei einer grossen Anzahl gleichzeitig bearbeiteter Gegenstände bzw. Deckel dieselbe bleibt. Natürlich können die Werkzeughalteplatten bzw. die Einheiten die nebeneinander liegen auch gekoppelt werden, was durch Striche 60 angedeutet ist. Die funktionell separaten Einheiten werden dadurch aber in ihrem Biegeverhalten nicht schlechter. Anstelle eines separaten Antriebes 45 für jede der Einheiten kann auch für alle Einheiten ein gemeinsamer Antrieb der einzelnen angetriebenen Werkzeugträger 55 vorgesehen sein oder es können Gruppen von Einheiten jeweils einen gemeinsamen Antrieb aufweisen.

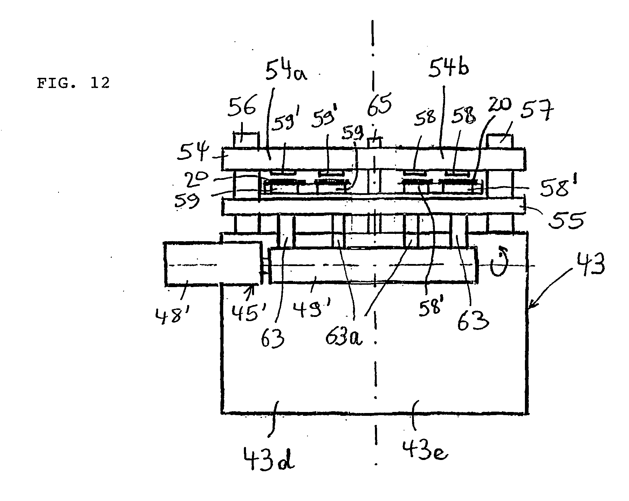

Figur 12 zeigt eine weitere Ausgestaltung der Bearbeitungsstationen, welche nicht gemäss der Erfindung gebildet sind, wobei als Beispiel wiederum die Stanzstation 43 gezeigt ist. Gleiche Bezugszeichen wie bei der Figur 11 verwendet bezeichnen dabei dieselben Elemente. In dieser Ausführungsform bilden die unteren Werkzeuge 59 und die oberen Werkzeuge 59' zusammen und die unteren Werkzeuge 58' und die oberen Werkzeuge 58 zusammen je eine funktionell separate Einheit 43d bzw. 43e, indem die obere Werkzeugplatte 54, z.B. über zwei zusätzliche Säulen 65, so abgestützt ist, dass jede Seite 54a, 54b der beidseits der Säulen 65 liegenden Werkzeughalterplatte für die Durchbiegung eine funktionell separate Einheit bildet. Die untere Werkzeugplatte kann ebenfalls in diesem Sinne getrennt ausgeführt sein, ist aber in diesem Beispiel als eine Platte gezeigt, die die vier Werkzeuge 59 und 58' trägt, und die über weitere Stössel 63a im Wesentlichen mittig an der Exzenterwelle 49 abgestützt ist. Auch auf diese Weise kann funktionell jede Einheit mit den beiden Werkzeugen beidseits der Stössel 63a als funktionell separate Einheit betreffend das Biegeverhalten betrachtet werden. Natürlich können auch Gruppen von mehr als zwei Werkzeugen gebildet werden, so dass z.B. zwei Gruppen von je drei Werkzeugen gebildet werden, die jeweils eine funktionell separate Einheit bilden. Sollen noch mehr Deckel gleichzeitig hergestellt werden, so können z.B. zwei der Bearbeitungsstationen 43 von Figur 12 nebeneinander plaziert werden, wie dies für die Einzelstationen von Figur 11 gezeigt worden ist, so dass nebeneinander acht Deckel gleichzeitig bearbeitet werden können, ohne dass das negative Durchbiegeverhalten eines achtfachen Mehrfachwerkzeuges auftritt.

In der Figur 10 können die weiteren Bearbeitungsstationen ebenfalls auf die geschilderte Weise wie die Stanzstationen gemäss Figur 11 oder Figur 12 als funktionell separate Einheiten von Einzelwerkzeugbearbeitungsstationen oder nicht erfindungsgemäss als Bearbeitungsstationen mit Gruppen von Werkzeugen ausgeführt werden. Die Bearbeitungsstation 44 ist dabei diejenige, welche das Ziehen des Randes 22 gemäss Figur 5 durchführt. Die in Figur 10 dargestellten Bearbeitungsstationen zeigen eine Variante, bei welcher vorgeschnittene Deckelfolien in einem Stapel 45 angeordnet sind und einzeln abgestapelt auf die Deckelteile gelegt und allenfalls vorgeheftet werden, um sie für den weiteren Transport zu fixieren. In dieser Station 45 könnte indes auch ein Folienstanzwerkzeug vorgesehen sein, welches die Folienteile 25 direkt aus einer grösseren Folienbahn ausstanzt und am Deckelteil allenfalls vorheftet, z.B. durch punkt- oder bereichsweise Wärmeeinwirkung. Auch die Station 45 ist, wie gesagt; als Einzelwerkzeugstation oder nicht erfindungsgemäss als Station mit Gruppen von Werkzeugen, die funktionell separat sind, ausgeführt.

Die Station 46 kann eine Vorwärmstation sein, welche indes fakultativ ist. Vorteilhafterweise arbeitet solch eine Vorwärmstation berührungsfrei durch z.B. Induktion oder Infrarotstrahlung, mit der Folge, dass die mechanisch einfache Ausführung hohe Taktzahlen unterstützt.

Die Station 47 schliesslich ist die eigentliche Siegelstation, welche auf die bekannte Art und Weise arbeitet und die Folie 25 am Deckelteil 20 durch Heisssiegelung dichtend befestigt. Natürlich können auf bekannte Weise die Stationen 45 und 46 weggelassen werden und die Ausstanzung der Folie 25, deren Platzierung auf der Deckelöffnung und deren Befestigung kann allein in der Station 47 stattfinden.

Es zeigt sich jedoch, dass die Auftrennung der Funktionen "Ausstanzen der Folie für die Heisssiegelung" , "Vorheften" und / oder "Vorwärmen" in verschiedene Bearbeitungsstationen vorteilhaft ist und insbesondere in Kombination mit der Ausgestaltung der Bearbeitungsstationen zu funktionell separaten Einheiten vorteilhafte Wirkung zeigt: Durch die Einzelstationen sind erhöhte Taktzahlen möglich, da nunmehr geringere Massen zu beschleunigen sind. Die Auftrennung der Bearbeitungsfunktionen hat zur Folge, dass pro Bearbeitungstakt in den einzelnen Bearbeitungsstationen weniger Funktionen zu erfüllen sind, diese mechanisch einfacher ausgeführt werden können (weniger Massen) was die nun möglichen höheren Taktzahlen unterstützt bzw. realisierbar macht.

Ebenso besteht Synergie zwischen der Einzelwerkzeugstation und der Vorwärmung: Durch die Einzelwerkstation wird die Durchbiegung der Werkzeugplatten verhindert; mit der Folge, dass die Werkzeuge selbst parallel zur Hubrichtung ausgerichtet bleiben. Dies ist bei der Durchbiegung der Werkzeugplatten in den konventionellen Mehrfachwerkzeugträgern wie oben erwähnt nicht der Fall: Die Werkzeuge stehen senkrecht auf der Biegelinie und sind nicht mehr parallel zur Hubrichtung ausgerichtet. Dadurch wird die Stanzung der Folie, des Deckels und die Qualität der Heisssiegelung, auf jeden Fall bei hohen Taktzahlen, negativ beeinflusst. Insbesondere die Heisssiegelung kann, bei an sich wünschenswert grosser Anzahl an Werkzeugen auf einer Werkzeugplatte gemäss Stand der Technik nicht mehr in der notwendigen Qualität erzeugt werden.

Wenn nun z.B. reine Kunststofffolien anstelle der konventionellen mit Kunststoff beschichteten Metallfolie zur Verarbeitung gelangen sollen, beträgt die Schnitttoleranz bzw. der Schnittspalt ca. ein Tausendstel Millimeter. Eine Schrägstellung des Werkzeugs aufgrund der Durchbiegung der Werkzeugplatte ist, wie erwähnt, hier aufgrund der sehr kleinen Schnittspalte besonders kontraproduktiv.

Durch die Vorwärmung wird nun der Bedarf nach einer starken Heizung in der Siegelstation vermieden, was deren thermischen Haushalt wesentlich entlastet, was die Einhaltung einer konstanten Betriebstemperatur entscheidend erleichtert. Dadurch kann der Wärmeverzug unter Kontrolle gehalten werden, so dass die geforderte Toleranz auch bei Verarbeitung von Kunststofffolien im Bereich der tausendstel Millimeter während dem Produktionsprozess zuverlässig gehalten werden kann. Es können die Folie selbst und die Deckelringe separat, auf eine jeweils optimale Temperatur, welche nicht die gleiche sein muss, vorgewärmt werden. Die Vorwärmtemperatur selbst kann der Fachmann je nach den zu verwendenden Materialien bestimmen.

Die Einzelwerkzeugstation, unterstützt durch die Auftrennung der verschiedenen Funktionen, wie oben erwähnt, erlaubt hohe Taktzahlen; die Vorwärmung die Verarbeitung von Kunststofffolien, welche unter Einhaltung von Schnittspalten im Bereich von Tausendstel-Millimetern gestanzt werden müssen, bei den gewünschten hohen Taktzahlen.

Die Bearbeitungsstation 48 ist eine fakultative Kühlstation während die Bearbeitungsstation 49 wiederum die Prägung der Folie und die Umbördelung des Deckelteiles 20 auf die bereits geschilderte Weise gemäss Figur 8 vornimmt. Insbesondere diese Bearbeitungsstation ist wiederum bevorzugterweise gemäss der Erfindung mit Einzelstationen entsprechend Figur 11 oder mit kombinierten aber funktionell separaten nicht erfindungsgemässen Stationen gemäss Figur 12 ausgeführt. Dasselbe kann für die Prüfstation 50 gelten, welche wiederum die dichten Deckel von allenfalls undichten Deckeln trennt.

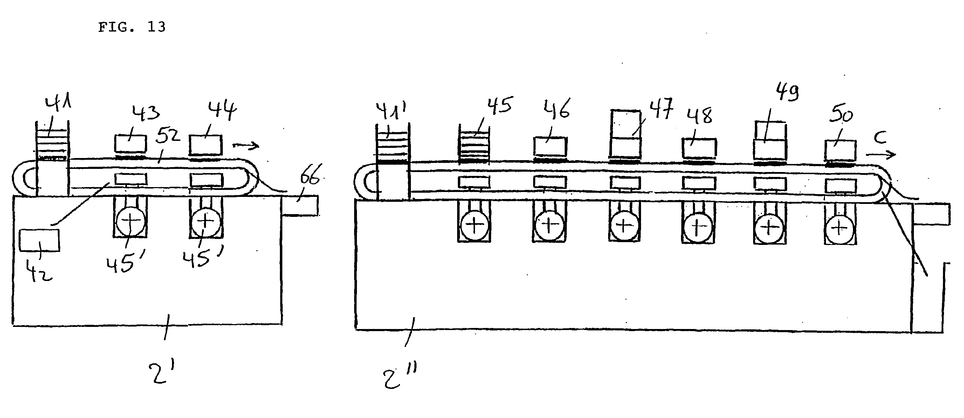

Figur 13 zeigt eine weitere Ausführungsform, welche grundsätzlich gleich aufgebaut ist wie die Ausführungsform der Figuren 10 bis 12. Dabei ist aber die Bearbeitungseinrichtung in Module aufgebaut, wobei das eine Modul mit 2' bezeichnet und das andere mit 2" bezeichnet ist. Für die mit den Figuren 10 bis 12 gleichen Elemente werden die gleichen Bezugszeichen verwendet. So ist im Modul 2' der Stapel 41 vorgesehen sowie die Bearbeitungsstationen 43 und 44. Die somit entsprechend Figur 5 bearbeiteten Deckelteile gelangen dann in eine Aufnahme 66. Beim Modul 2" ist ein Stapel 41' für die entsprechend bereits ausgestanzten und gezogenen Deckelteile gemäss Figur 5 vorgesehen und diese werden abgestapelt und gelangen nachfolgend in die Bearbeitungsstationen 45, 46 und 48, falls diese vorgesehen sind und jedenfalls in die Bearbeitungsstationen 47, 49 und 50, wie dies bereits geschildert worden ist.

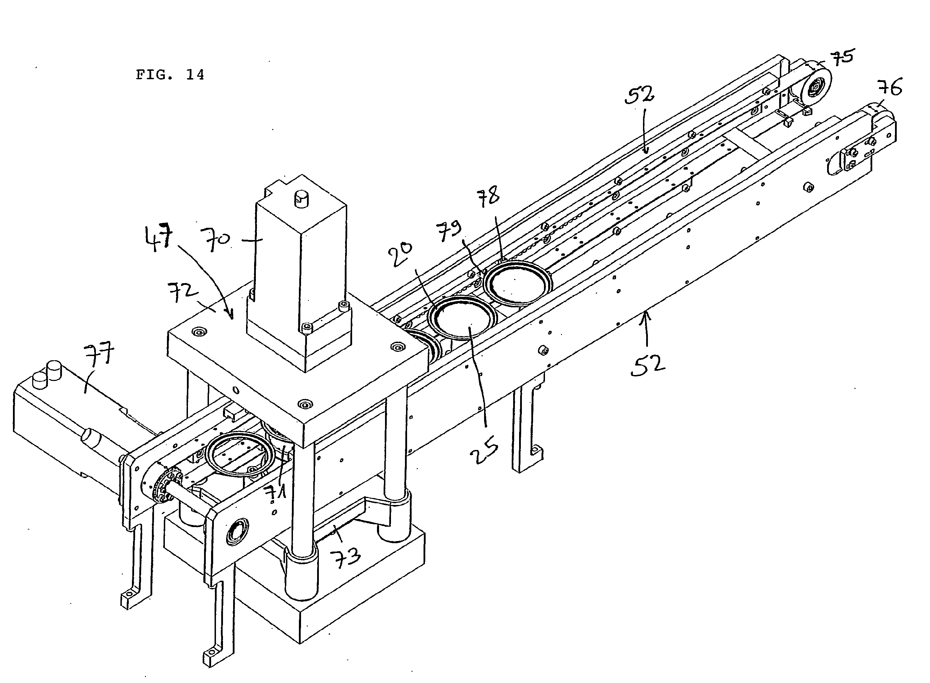

Figur 14 zeigt in dreidimensionaler Darstellung einen Teil einer erfindungsgemässen Bearbeitungseinrichtung, wobei diese als einreihige Bearbeitungseinrichtung ausgestaltet ist, in welcher also in den Bearbeitungsstationen jeweils nur ein einzelnes Werkzeug und nicht eine Gruppe von Werkzeugen auf den Gegenstand einwirkt. Die Figur 14 zeigt dabei als Bearbeitungsstation nur die Heisssiegelstation 47, wobei die Zufuhr der Folie für die Abreissfolie nicht dargestellt ist. Gleiche Bezugszeichen wie bis anhin verwendet zeigen dabei wiederum dieselben Elemente. Das Werkzeug ist dabei ein geheizter Stanz- und Siegelstössel, wie dies an sich bekannt ist und vorliegend nicht näher erläutert wird. Dieser Stössel wird in dem gezeigten Beispiel von oben her durch den Antrieb 70 angetrieben und beaufschlagt den auf dem unteren Werkzeug 71 abgesetzten Deckelteil 20. Auch hier ist durch die Ausgestaltung als Bearbeitungsstation für einen einzigen Gegenstand eine Durchbiegung der oberen Platte 72 bzw. der unteren Platte 73, welche die Werkzeughalterungen bzw. -aufnahmen bilden, auch bei hohen Stanz- und Siegeldrücken praktisch ausgeschlossen. Die vorherigen und nachfolgenden Bearbeitungsstationen sind in dieser Figur nicht dargestellt, sind aber entsprechend als Bearbeitungsstationen für einen Gegenstand ausgeführt. Auch bei dieser Ausführung können natürlich beliebig viele solche einzelne Bearbeitungseinrichtungen als funktionell separate Einrichtungen nebeneinander gestellt werden, wenn mehrere Reihen von Deckeln gleichzeitig bearbeitet werden sollen. Auch die übrige Ausgestaltung kann entsprechend den Figuren 11 oder aber 12 vorgenommen werden. In Figur 14 ist nun die umlaufende Fördereinrichtung 52 näher dargestellt, wobei diese zwei umlaufende Förderbänder 75 und 76 mit einem entsprechenden Antrieb 77 zeigt. Die beiden Förderbänder 75 und 76 werden dadurch synchron angetrieben. Es können auf diese Weise einzelne Förderstrecken der Fördereinrichtung 52 ausgebildet sein oder die ganze Fördereinrichtung kann als eine einzige Strecke mit entsprechend langen Bändern 75 und 76 ausgestaltet sein. Der Antrieb 77 bewirkt ein Transportieren in Förderrichtung in der Weise, dass die Förderbänder jeweils gestoppt werden, wenn sich die Gegenstände, z.B. die Deckelteile 20 in den Bearbeitungsstationen befinden, um dort bearbeitet zu werden. Nach Durchführung des Bearbeitungsschrittes wird das Förderband wieder um einen Schritt in Förderrichtung bewegt, damit die jeweils nachfolgenden Deckel in die Bearbeitungsstationen gelangen. Die Gegenstände bzw. Deckel liegen beidseits mit ihren Randbereichen auf den Förderbändern auf. Bevorzugt sind an diesen Fixierungsmittel angeordnet, welche die Deckel bzw. Gegenstände in Förderrichtung, vorzugsweise formschlüssig, derart fixieren, dass sich keine Verschiebung der Gegenstände bei deren Förderung ergibt. Für die runden Deckel ist dies in Figur 14 bei dem einen Deckel durch Elemente 78 und 79 gezeigt, welche an dem Förderband befestigt sind und mit den entsprechenden gegenüber liegenden am Förderband 76 angeordneten Fixierungs- bzw. Halteelementen den äusseren Umfang des Deckels so festlegen, dass dieser in Transportrichtung bzw. in Gegenrichtung und in der Transportebene auch in Richtung senkrecht zur Transportebene fixiert ist. Hingegen ist ein Abheben nach oben ohne weiteres möglich. Die Haltemittel 78 und 79 können indes auch leicht magnetisch ausgeführt sein, so dass deren Magnetkraft für ein Abheben des Deckels 20 von den Förderbändern 75 überwunden werden muss. Die Haltemittel 78 und 79 sind nur für den einen Deckel in der Zeichnung angegeben und bei den weiteren Deckeln der Einfachheit halber weggelassen. Indes sind in den Förderbändern, welche in der Regel wie angedeutet Zahnriemen sind, die Befestigungspunkte für die übrigen Haltemittel angedeutet. Die Förderanordnung 52 mit den beiden Bändern findet bevorzugt auch bei den Bearbeitungseinrichtungen gemäss den Figuren 10 bis 13 Verwendung. Auch für beliebige andere Bearbeitungs- oder Fördereinrichtungen ist die Förderanordnung mit den zwei parallelen Bändern verwendbar.

Solch eine Fördereinrichtung ist besonders vorteilhaft, wenn hohe Taktzahlen in einer Anordnung mit mehreren Arbeitsstationen realisiert werden sollen. Eine Förderanordnung gemäss dem geschildertem Stand der Technik weist hin- und hergehende Massen auf; bei hohen Taktzahlen sind dabei Verstärkungen gegen Verformungen notwendig und damit wird auch wieder eine erhöhte Antriebsleistung benötigt, was unerwünscht ist. Die oben beschriebene, bandförmige Fördereinrichtung vermeidet solche Nachteile.

Zusammenfassend stellt die vorliegende Erfindung verschiedene Massnahmen zur Verfügung, um den Betrieb einer Vorrichtung der eingangs genannten Art zu verbessern. Einerseits erlaubt die funktionelle Unabhängigkeit der einzelnen Werkzeuge (bzw. aus Ober- und Unterwerkzeug bestehende Werkzeugpaarungen) eine Erhöhung der Taktzahl; andererseits wird dies unterstützt durch die Zuordnung einzelner Operationen (Stanzung, Vorwärmen, Heften, Siegelung etc) auf je eine Bearbeitungsstation. Ebenso betreffend der Vorwärmung mit Hilfe berührungsloser Verfahren wie Induktion etc. Jede dieser Massnahmen allein verbessert eine Einrichtung gemäss Stand der Technik; verschiedene Kombinationen einzelner Massnahmen erlauben eine massgeschneiderte Lösung für bestimmte Bedürfnisse (z.B. Stanzung der Folie durch die erfindungsgemässe Einrichtung oder Verwendung eines Stapels ausgestanzter Foliendeckel in der erfindungsgemässen Einrichtung). Immer ergibt sich eine Verbesserung der Taktzahl bzw. der Qualität (einwandfreie Stanzung durch Vorwärmung oder unveränderte Ausrichtung der Werkzeuge gegenüber ihrer Vorschubrichtung).

Entsprechend liegt es im Rahmen der vorliegenden Erfindung, eine oder mehrere der vorgeschlagenen Massnahmen zur Lösung der Aufgabe der vorliegenden Erfindung einzusetzen.

## Patentansprüche

1. Bearbeitungseinrichtung mit einer Fördereinrichtung (52) und einer Mehrzahl von in Förderrichtung aufeinanderfolgenden Bearbeitungsstationen (43-50), wobei die Fördereinrichtung zur Förderung einer einreihigen Abfolge von Gegenständen und die Bearbeitungsstationen jeweils zur Bearbeitung eines einzigen Gegenstandes ausgestaltet sind, **dadurch gekennzeichnet, dass** die Bearbeitungseinrichtung zur Herstellung von Metalldeckeln (20) mit Aufreissfolien (25) bestimmt ist und als Bearbeitungsstation mindestens eine Stanzbearbeitungsstation (43) mit Oberwerkzeug (58, 59') und Unterwerkzeug (59, 58') zum Stanzen eines Loches sowie eine Ziehbearbeitungsstation (44) für den gestanzten Lochrand und eine Siegelbearbeitungsstation (47) zum Aufbringen der Aufreissfolie (25) über dem Loch aufweist, wobei einzelne Deckelteile (20) von der Fördereinrichtung (52) in Reihe nacheinander zu den in Förderrichtung aufeinanderfolgenden Bearbeitungsstationen (43-50) transportierbar sind und dort in Deckelteilaufnahmepositionen bearbeitbar sind, und wobei die Fördereinrichtung (52) von zwei parallel angeordneten und synchron antreibbaren Förderriemen (75, 76) gebildet ist, an denen durch einander gegenüberliegende Haltemittel (78, 79) einzelne Deckelteilaufnahmen gebildet sind.

2. Bearbeitungseinrichtung nach Anspruch 1, **dadurch gekennzeichnet, dass** die Siegelbearbeitungsstation (47) eine kombinierte Bearbeitungsstation ist, die die Aufreissfolienteile (25) aus einer Folie ausstanzt und über dem Loch aufbringt.

3. Bearbeitungseinrichtung nach Anspruch 1, **dadurch gekennzeichnet, dass** die Siegelbearbeitungsstation zum Aufbringen vorgängig ausgestanzter Aufreissfolienteile (25) ausgestaltet ist.

4. Bearbeitungseinrichtung nach Anspruch 3, **dadurch gekennzeichnet, dass** der Siegelbearbeitungsstation eine Ausstanzstation für die Aufreissfolienteile (25) oder eine Abstapelstation für Aufreissfolienteile (25) vorgeschaltet ist.

5. Bearbeitungseinrichtung nach Anspruch 4, **dadurch gekennzeichnet, dass** der Siegelbearbeitungsstation (47) eine Vorheftstation und/oder eine Vorwärmstation (46) vorgeschaltet ist.

6. Bearbeitungseinrichtung nach einem der Ansprüche 1 bis 5, **dadurch gekennzeichnet, dass** sie als Bearbeitungsstation eine Prägestation (49) für die Aufreissfolie (25) und eine Biegestation (49) für den Lochrand, insbesondere eine kombinierte Präge- und Biegestation aufweist.

7. Bearbeitungseinrichtung nach einem der Ansprüche 1 bis 6, **dadurch gekennzeichnet, dass** sie in Förderrichtung in mindestens zwei separate Anordnungen (2', 2") aufgetrennt ist, insbesondere in eine erste Anordnung (2') enthaltend eine Stanzbearbeitungsstation (43) und eine Ziehbearbeitungsstation (44) und eine zweite Anordnung (2") enthaltend eine Siegelbearbeitungsstation (47) und eine Prägebearbeitungsstation (49).

8. Bearbeitungseinrichtung nach Anspruch 1, **dadurch gekennzeichnet, dass** die Haltemittel magnetische Haltemittel sind.

## Claims

1. Processing installation with a conveying installation (52) and a plurality of consecutive processing stations (43-50) in conveying direction, wherein the conveying installation is formed for conveying a one-row succession of objects and each one of the processing stations for processing a single object, **characterized in that** the processing installation is intended for manufacturing metal lids (20) with peel-off foils (25) and has, as processing station, at least a punching station (43) with an upper tool (58, 59') and a lower tool (59, 58') for punching an opening as well as a forming station (44) for the punched edge of the opening and a sealing station (47) for applying the peel-off foil (25) on top of the opening, wherein individual lid parts (20) are transportable by the conveying installation (52) in a row one after the other to the consecutive processing stations (43-50) in conveying direction and are processable there in lid part receiving positions, and wherein the conveying installation (52) is formed by two parallel arranged conveyors (75, 76) which are adapted to be actuated synchronously, at which individual lid part receivers are formed by mutually opposite holding means (78, 79).

2. Processing installation according to claim 1, **characterized in that** the sealing station (47) is a combined processing station which punches the peel-off foil parts (25) out of a foil and applies them on top of the opening.

3. Processing installation according to claim 1, **characterized in that** the sealing station is formed for applying previously punched out peel-off foil parts (25).

4. Processing installation according to claim 3, **characterized in that** a punching out station for the peel-off foil parts (25) or a destacking station for peel-off foil parts (25) is arranged upstream of the sealing station.

5. Processing installation according to claim 4, **characterized in that** a pre-tacking station and/or a preheating station (46) is arranged upstream of the sealing station (47).

6. Processing installation according to one of the claims 1 to 5, **characterized in that** it has, as processing station, an embossing station (49) for the peel-off foil (25) and a bending station (49) for the edge of the opening, particularly a combined embossing and bending station.

7. Processing installation according to one of the claims 1 to 6, **characterized in that** it is separated in conveying direction in at least two separate arrangements (2', 2"), particularly in a first arrangement (2') containing a punching station (43) and a forming station (44) and a second arrangement (2'') containing a sealing station (47) and an embossing station (49).

8. Processing installation according to claim 1, **characterized in that** the holding means are magnetic holding means.

## Revendications

1. Installation d'usinage, comprenant une installation d'acheminement (52) et plusieurs postes de traitement (43 à 50) successifs dans le sens de l'acheminement, dans laquelle l'installation d'acheminement est configurée pour acheminer une série d'objets sur une rangée et les postes de traitement sont configurés respectivement pour le traitement d'un seul objet, **caractérisé en ce que** l'installation de traitement est destinée à fabriquer des couvercles métalliques (20) munis d'opercules à déchirer (25) et présente en tant que poste de traitement au moins un poste de traitement de découpage (43) avec un outil supérieur (58, 59') et un outil inférieur (59, 58') pour découper un trou, ainsi qu'un poste de traitement d'étirage (44) pour le bord du trou découpé, et un poste de traitement de scellage (47) pour appliquer l'opercule à déchirer (25) sur le trou, dans laquelle des pièces de couvercle (20) individuelles peuvent être transportées par l'installation d'acheminement (52) en ligne les unes après les autres jusqu'aux postes de traitement (43 à 50) successifs dans le sens de l'acheminement, et peuvent y être traitées dans des positions de logement de pièce de couvercle, et dans laquelle l'installation d'acheminement (52) est formée par deux courroies d'acheminement (75, 76) disposées en parallèle et pouvant être entraînées de façon synchrone, au niveau desquelles des logements de pièce de couvercle individuels sont formés par des moyens de retenue (78, 79) qui se font face.

2. Installation de traitement selon la revendication 1, **caractérisée en ce que** le poste de traitement de scellage (47) est un poste de traitement combiné qui découpe les morceaux d'opercules à déchirer (25) dans un film et les applique sur le trou.

3. Installation de traitement selon la revendication 1, **caractérisée en ce que** le poste de traitement de scellage est configuré pour appliquer des morceaux d'opercules à déchirer (25) découpés à l'étape précédente.

4. Installation de traitement selon la revendication 3, **caractérisée en ce que** le poste de traitement de scellage est précédé d'un poste de découpage pour les morceaux d'opercules à déchirer (25) ou d'un poste d'empilement pour morceaux d'opercules à déchirer (25).

5. Installation de traitement selon la revendication 4, **caractérisée en ce que** le poste de traitement de scellage (47) est précédé d'un poste d'attache préliminaire et/ou d'un poste de préchauffage (46).

6. Installation de traitement selon l'une quelconque des revendications 1 à 5, **caractérisée en ce qu'**elle présente, en tant que poste de traitement, un poste d'estampage (49) pour l'opercule à déchirer (25) et un poste de pliage (49) pour le bord du trou, en particulier un poste combiné d'estampage et de pliage.

7. Installation de traitement selon l'une quelconque des revendications 1 à 6, **caractérisée en ce que** dans le sens de l'acheminement, elle est divisée en au moins deux agencements séparés (2', 2"), en particulier en un premier agencement (2') comprenant un poste de traitement de découpage (43) et un poste de traitement d'étirage (44) et un deuxième agencement (2") comprenant un poste de traitement de scellage (47) et un poste de traitement d'estampage (49).

8. Installation de traitement selon la revendication 1, **caractérisée en ce que** les moyens de retenue sont des moyens de retenue magnétiques.
